# EUROPÄISCHE PATENTSCHRIFT

(11) **EP 2 697 488 B1**
(45) Veröffentlichungstag und Bekanntmachung des Hinweises auf die Patenterteilung: **03.06.2015**
(21) Anmeldenummer: 12715646.1
(22) Anmeldetag: 11.04.2012
(51) Int. Cl.: F01N 3/20

(54) **VERFAHREN ZUM BETRIEB EINER SCR-DOSIEREINHEIT**
METHOD TO OPERATE A SCR DOSING SYSTEM
PROCÉDÉ POUR CONTROLER UN SYSTEME DE DOSAGE SCR

(30) Priorität: 13.04.2011 DE 102011016967
(43) Veröffentlichungstag der Anmeldung: 19.02.2014
(73) Patentinhaber: Emitec Gesellschaft für Emissionstechnologie mbH, 53797 Lohmar (DE)
(72) Erfinder: HODGSON, Jan, 53840 Troisdorf (DE); SCHEPERS, Sven, 53844 Troisdorf (DE); HIRTH, Peter, 51503 Rösrath (DE)
(74) Vertreter: Rössler, Matthias
(86) Internationale Anmeldenummer: PCT/EP2012/056508
(87) Internationale Veröffentlichungsnummer: WO 2012/140034

(56) Entgegenhaltungen:
- EP-A1- 2 166 208
- EP-A1- 2 447 495
- WO-A1-2010/119711
- US-A1- 2010 229 532

## Beschreibung

Die Erfindung betrifft ein Verfahren zum Betrieb einer Dosiereinheit zur Dosierung von Reduktionsmittel in eine Abgasbehandlungsvorrichtung zur Reinigung der Abgase einer Verbrennungskraftmaschine.

In letzter Zeit finden Abgasbehandlungsvorrichtungen vermehrt Verbreitung, in welche ein Reduktionsmittel zur Reduktion bestimmter Schadstoffbestandteile im Abgas zugeführt wird. Besonders häufig werden Abgasbehandlungsvorrichtungen eingesetzt, mit denen das Verfahren der selektiven katalytischen Reduktion [SCR-Verfahren; SCR = *Selective Catalytic Reduction*] durchgeführt wird. Bei diesem Verfahren werden Stickstoffoxidverbindungen im Abgas mit dem Reduktionsmittel zu unschädlichen Bestandteilen wie Kohlendioxid, Wasser und Stickstoff reduziert. Als Reduktionsmittel wird häufig Ammoniak eingesetzt. Ammoniak wird in Kräftfahrzeugen regelmäßig nicht direkt bevorratet, sondern in Form einer Reduktionsmittelvorläuferlösung, die dann abgasintern oder abgasextern zu Reduktionsmittel umgesetzt wird. Eine besonders häufig eingesetzte derartige Reduktionsmittelvorläuferlösung ist Harnstoff-Wasser-Lösung. Eine 32,5 prozentige Harnstoff-Wasser-Lösung für diesen Zweck ist beispielsweise unter dem Handelsnamen AdBlue^{®} erhältlich. Im Folgenden werden die Begriffe Reduktionsmittel und Reduktionsmittelvorläuferlösung synonym füreinander verwendet. Insbesondere wird Reduktionsmittelvorläuferlösung auch als Reduktionsmittel bezeichnet.

Zur Förderung von Reduktionsmittel in die Abgasbehandlungsvorrichtung kann eine Dosiereinheit eingesetzt werden, welche das Reduktionsmittel aus einem Reduktionsmitteltank in die Abgasbehandlungsvorrichtung fördert. Problematisch bei derartigen Dosiereinheiten kann die Deaktivierung der Dosiereinheit sein, wenn die Verbrennungskraftmaschine bzw. das Kraftfahrzeug, in dem die Verbrennungskraftmaschine und die Dosiereinheit eingesetzt sind, abgestellt wird. In diesem Zusam-Zusammenhang ist zu berücksichtigen, dass eine 32,5% prozentige Harnstoff- Wasser-Lösung bei ca. -11 °C einfriert. Derartig niedrige Temperaturen können während des Betriebs eines Kraftfahrzeugs insbesondere während langer Stillstandszeiten im Winter auftreten. Durch das Einfrieren verändert sich das Volumen des Reduktionsmittels. Dies kann eine Dosiereinheit schädigen, die beispielsweise eine empfindliche Pumpe und/oder empfindliche Ventile aufweist.

Aus EP 2 166 208 A1 ist ein Verfahren zur Abgaskontrolle bekannt, bei dem ein Reduktionsmittel aus der Reduktionsmittelleitung zwischen Pumpe und Zugabeeinheit zurück in den Reduktionsmitteltank befördert werden kann. Das Verfahren ist darauf gerichtet, zu erkennen, ob eine automatische oder bewusste Abschaltung der Verbrennungskraftmaschine erfolgt ist. Im Falle der automatischen Abschaltung wird eine Rückförderung nicht vorgenommen.

Hiervon ausgehend ist es Aufgabe der vorliegenden Erfindung, insbesondere die mit der Abschaltung einer Dosiereinheit für Reduktionsmittel einhergehenden Probleme, die hier im Zusammenhang mit dem Stand der Technik geschildert sind, zu lösen bzw. zumindest zu lindern. Es soll insbesondere ein besonders vorteilhaftes Verfahren zur Abschaltung (und/oder Ruhigstellung - *"stand-by"*) einer Dosiereinheit für Reduktionsmittel angegeben werden.

Diese Aufgaben werden gelöst mit einem Verfahren gemäß den Merkmalen des Patentanspruchs 1. Weitere vorteilhafte Verfahrensführungen sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft ein Verfahren zum Betrieb einer Dosiereinheit zur Dosierung von Reduktionsmittel in eine Abgasbehandlungsvorrichtung zur Reinigung der Abgase einer Verbrennungskraftmaschine, wobei die Dosiereinheit zumindest eine Förderpumpe und zumindest einen Injektor sowie zumindest einen Leitungsabschnitt zur Leitung von Reduktionsmittel von der zumindest einen Förderpumpe hin zu dem zumindest einen Injektor aufweist, und das Verfahren zumindest folgende Schritte aufweist:
a) Betreiben der Dosiereinheit zur Dosierung von Reduktionsmittel in die Abgasbehandlungsvorrichtung;
b) Abschalten der Dosiereinheit;
c) Aufrechterhalten eines ersten Drucks, der oberhalb des atmosphärischen Drucks liegt, in dem Leitungsabschnitt für zumindest einen ersten Zeitraum.

Eine solche Dosiereinheit kann zusätzlich noch einen Saugleitungsabschnitt aufweisen, welcher sich von einem Reduktionsmitteltank zu der Förderpumpe erstreckt. In dem Reduktionsmitteltank ist Reduktionsmittel gespeichert. Die Förderpumpe kann durch diesen Saugleitungsabschnitt Reduktionsmittel aus dem Reduktionsmitteltank ansaugen. In der Förderpumpe findet eine definierte Druckerhöhung statt, so dass das Reduktionsmittel während des Betriebs in dem Leitungsabschnitt unter einem definierten Betriebsdruck vorliegt. Das Reduktionsmittel in dem Leitungsabschnitt wird dann über den Injektor in die Abgasbehandlungsvorrichtung zugeführt. Der Leitungsabschnitt dient somit bevorzugt auch als Speicher für unter Druck stehendes Reduktionsmittel. Wenn das Reduktionsmittel während des Betriebes (also auch in Schritt a)) in dem Leitungsabschnitt unter einem definierten Druck (Betriebsdruck) steht, kann über die Öffnungszeit des Injektors die Menge des Reduktionsmittels gesteuert werden, welche der Abgasbehandlungsvorrichtung zugeführt wird.

Mit anderen Worten umfasst somit Schritt a) insbesondere auch zumindest folgende Prozesse
- Aktivieren (elektrische Stromzufuhr) von elektrischen Komponenten, wie z. B. bei einem Injektor, einer Förderpumpe, einem Sensor, einem Ventil, einer Steuereinheit oder dergleichen,
- Ermitteln eines Zustandsparameters des Reduktionsmittels (Temperatur, Druck, etc.),
- Ermitteln einer Förderanfrage zur Zudosierung einer Menge an Reduktionsmittel hin zur Abgasbehandlungsvorrichtung,
- Einstellen eines Betriebsdruckes in einem Leitungsabschnitt hin zum Injektor mittels einer Förderpumpe;
- Betreiben des Injektors (z. B. Öffnen und Schließen eines Ventils),
- Heizen bzw. Kühlen von Komponenten (Leitungsabschnitt, Injektor, Förderpumpe, etc.).
Somit umfasst Schritt a) also wenigstens einmal eine signifikante Druckerhöhung im Leitungsabschnitt, insbesondere bis zu einem vorgegebenen Betriebsdruck.

Beim Abschalten der Dosiereinheit gemäß Schritt b) können insbesondere folgende Prozesse durchgeführt bzw. eingeleitet werden:
- Deaktivieren (Unterbrechen der elektrischen Stromzufuhr) von elektrischen Komponenten, wie z. B. bei einem Injektor, einer Förderpumpe, einem Sensor, einem Ventil, einer Steuereinheit oder dergleichen,
- Ausschalten der Heizung / Kühlung von Komponenten (Leitungsabschnitt, Injektor, Förderpumpe, etc.).
- Ermitteln eines Zustandsparameters des Reduktionsmittels und/oder der Umgebung (Temperatur, Druck, etc.).

Es hat sich überraschenderweise herausgestellt, däss die einganges geschilderten Probleme, die mit der Abschaltung der Dosiereinheit einhergehen, vermieden werden können, wenn nach dem Betrieb der Dosiereinheit in dem Leitungsabschnitt von der Förderpumpe zu dem Injektor ein erhöhter Druck für einen bestimmten Zeitraum zunächst aufrecht erhalten wird. Dieser erste Druck liegt dabei insbesondere in einem Bereich vom Betriebsdruck (obere Grenze) bis oberhalb des Atmosphärendrucks (untere Grenze). Regelmäßig wird dieser erste Druck geringer sein als der Betriebsdruck, weil mit einer (teilweisen) Deaktivierung von Komponenten der Dosiereinheit auch teilweise Speichervolumina gefüllt bzw. geleert und/oder ein Rückstrom hin zum Reduktionsmitteltank realisiert werden kann. Jedenfalls ist es regelmäßig nicht erforderlich, die Förderpumpe beim Abschalten nochmals zu aktivieren, um den ersten Druck einzustellen.

Der erste Zeitraum, in dem der erste Druck noch aufrecht erhalten wird, schließt sich vorzugsweise unmittelbar an den Zeitpunkt der Abschaltung in Schritt b) an. Dabei ist nicht zwingend, dass der erste Druck konstant bleibt, jedoch sollte ein ggf. auftretender Druckabfall (deutlich) verlangsamt sein gegenüber einem (einfachen) Entlüften des Leitungsabschnittes. Insbesondere verläuft ein Druckabfall nach Ablauf des ersten Zeitraumes in einem stärkeren, schnelleren Maße.

Besonders bevorzugt ist, wenn der erste Druck während Schritt c) oberhalb von 2 bar liegt. Der erste Druck liegt bevorzugt sogar oberhalb von 3 bar und insbesondere bevorzugt oberhalb von 5 bar.

In einer besonders bevorzugten Ausführungsform des Verfahrens beträgt der erste Druck während Schritt c) sogar wenigstens 8 bar. Es ist ferner möglich, dass der erste Druck auf über 15 bar oder sogar auf über 20 bar erhöht wird.

Erfindungsgemäß erfolgt während der Abschaltung in Schritt b) in dem Leitungsabschnitt eine Druckerhöhung auf einen ersten Druck. Dann ist der erste Druck höher als der Betriebsdruck, der während des regulären Betriebs in der Dosiereinheit vorliegt.

Eine Druckerhöhung von dem Betriebsdruck auf den ersten Druck kann beispielsweise durch eine verzögerte Abschaltung einer Förderpumpe während Schritt b) und/oder eine erneute Aktivierung einer Förderpumpe während Schritt b) erreicht werden.

Es hat sich herausgestellt, dass viele Probleme im Zusammenhang mit der Abschaltung der Dosiereinheit damit zusammenhängen, dass niedrige Temperaturen der Dosiereinheit bzw. des Injektors gerade unmittelbar nach der Abschaltung der Dosiereinheit nicht eintreten. Es ist vielmehr sogar möglich, dass sich die Temperatur der Dosiereinheit bzw. des Injektors nach der Abschaltung zunächst sogar erhöht. Dabei ist möglich, dass sich ein Temperaturstau in der Abgasbehandlungsvorrichtung bzw. an dem Injektor bildet. Dies liegt beispielsweise auch daran, dass mit der Abschaltung der Dosiereinheit normalerweise auch einhergeht, dass eine

Kühlung des Injektors wegfällt. Der Injektor für Reduktionsmittel wird beispielsweise auch durch den Fahrtwind eines Kraftfahrzeuges gekühlt. Wenn das Kraftfahrzeug abgestellt wird, fällt dieser Fahrtwind weg. Besonders häufig tritt ein Temperaturstau auf, wenn die Dosiereinheit in unmittelbarer Nähe der Verbrennungskraftmaschine (beispielsweise im Motorraum eines Kraftfahrzeuges) angeordnet ist. Wenn die Verbrennungskraftmaschine abgeschaltet wird, kann die Temperatur im Motorraum aufgrund des Wegfalls der Motorkühlung beispielsweise auf bis zu 160 °C ansteigen. Die Temperatur im Motorraum wirkt dann unmittelbar auf die Dosiereinheit und den Leitungsabschnitt.

Der Temperaturstau kann dazu führen, dass das Wasser in dem Reduktionsmittel (bzw. der Reduktionsmittelvorläuferlösung) verdampft. Der Temperaturstau kann auch bewirken, dass das Reduktionsmittel zumindest teilweise chemisch umgesetzt wird. Dies kann insbesondere dann passieren, wenn die Temperatur des Reduktionsmittels durch den Temperaturstau über eine Umsetzungstemperatur des Reduktionsmittels (bzw. der Reduktionsmittelvorläüferlösung) angehoben wird. In dem Reduktionsmittel gelöster Harnstoff kann dann zu Ammoniak und/oder unerwünschten Nebenprodukten umgesetzt werden. Der Ammoniak ist regelmäßig gasförmig und bildet daher Gasblasen. Die beschriebene Umsetzungsreaktion ist unter den vorliegenden Bedingungen nicht reversibel, so dass auch bei einem Absinken der Temperatur der gasförmige Ammoniak erhalten bleiben würde.

Durch eine Erhöhung des Drucks nach der Abschaltung kann die Dampftemperatur des Wassers in dem Reduktionsmittel (bzw. der Reduktionsmittelvorläuferlösung) erhöht werden. Bei einer Druckerhöhung auf oberhalb von 2 bar steigt die Dampftemperatur von Wasser beispielsweise auf mehr als 120 °C an. Ein Verdampfen des Wassers aus dem Reduktionsmittel (bzw. aus der Reduktionsmittelvorläuferlösung) tritt dann nicht mehr auf. Durch eine Erhöhung des Drucks kann auch die Umsetzungstemperatur des Reduktionsmittels (bzw. der Reduktionsmittelvorläuferlösung) angehoben werden. Derart hohe Temperaturen können aufgrund eines Temperaturstaus in der Dosiereinheit bzw. an dem Injektor bei vielen Dosiereinheiten bereits sicher nicht mehr auftreten. Durch die Druckerhöhung kann daher gewährleistet werden, dass das Wasser in dem Reduktionsmittel auch nach der Abschaltung nicht verdampft bzw. kocht.

Weiterhin ist das erfindungsgemäße Verfahren dann vorteilhaft, wenn erst nach Ablauf des ersten Zeitraums ein Entlastungsventil an dem Leitungsabschnitt geöffnet wird (Schritt d)). Der erste Zeitraum ist vorzugsweise zumindest zwei Minuten, besonders bevorzugt zumindest 10 Minuten und insbesondere bevorzugt zumindest 15 Minuten oder sogar ganz besonders bevorzugt mindestens 25 Minuten lang.

Wenn der erste Zeitraum verstrichen ist, ist bereits eine ausreichende Abkühlung der Abgasbehandlungsvorrichtung sowie der Dosiereinheit erfolgt, so dass ein Temperaturstau an der Dosiereinheit nicht mehr auftreten kann und ein Verdampfen von Wasser in dem Reduktionsmittel nicht mehr droht.

Hinsichtlich dieser Druckentlastung ist anzumerken, dass hierfür das Reduktionsmittel aus dem Leitungsabschnitt zumindest teilweise entfernt wird. Hierfür kann das Reduktionsmittel in den Reduktionsmitteltank, den Injektor und/oder in die äußere Umgebung (z. B. einen anderen Auffangbehälter, etc.) geleitet werden.

Weiterhin ist bevorzugt, wenn der erste Druck in dem Leitungsabschnitt zumindest teilweise mit der Förderpumpe erzeugt wird. Wenn der erste Druck in dem Leitungsabschnitt zu früh abfällt, kann die Förderpumpe insbesondere erneut aktiviert werden. Insofern können Maßnahmen zur Überwachung des ersten Drucks vorgesehen sein, die dann ggf. eine erneute Aktivierung der Förderpumpe einleiten. Der erste Druck bleibt aufgrund des von der Förderpumpe zuvor während des regulären Betriebs der Dosiereinheit erzeugten Betriebsdruck normalerweise bestehen, insbesondere solange kein Leck in der Dosiereinheit bzw. in dem ersten Leitungsabschnitt vorliegt.

Gemäß einer Weiterbildung des Verfahrens wird auch vorgeschlagen, dass an dem Leitungsabschnitt mindestens eine Aufrechterhaltungsvorrichtung zur Aufrechthaltung des ersten Drucks vorgesehen ist. Eine solche Aufrechterhaltungsvorrichtung kann beispielsweise als elastisches Element bzw. als elastischer Balg ausgeführt sein, welcher mit dem Leitungsabschnitt in fludischer Verbindung steht. Dieser elastische Balg kann beispielsweise mit einer Feder beaufschlagt sein, die einen definierten Druck in dem Leitungsabschnitt erzeugt bzw. aufrecht erhält. Auch wenn eine Leckage an Reduktionsmittel aus dem Leitungsabschnitt auftritt, hält ein derartiges Aufrechterhaltungsmittel dann einen ersten Druck definiert aufrecht.

Die Aufrechterhaltungsvorrichtung kann mit zumindest einem Drücksensor, einer Förderpumpe und zumindest einer Kontrolleinheit eingerichtet sein. Die Kontrolleinheit steuert die Förderpumpe bei einer solchen Aufrechterhaltungsvorrichtung vorzugsweise so, dass ein (vorgegebener) erster Druck eingehalten wird. Die Pumpe wird vorzugsweise aktiviert, wenn an dem Drucksensor ein Abfall des Drucks in dem Leitungsabschnitt unter den ersten Druck erkannt wird. Die Pumpe wird vorzugsweise wieder deaktiviert, wenn der Druck in dem Leitungsabschnitt den ersten Druck erreicht.

In einer weiteren vorteilhaften Ausführungsvariante des Verfahrens weist die Dosiereinheit eine Kühleinrichtung zur Kühlung des Leitungsabschnitts und/oder zur Kühlung des Injektors auf. Diese Kühleinrichtung wird vorzugsweise während Schritt c) (insbesondere auch nach der Abschaltung der Dosiereinheit) für einen Zeitraum weiter betrieben. Dieser Zeitraum entspricht vorzugsweise dem ersten Zeitraum. So kann zusätzlich verhindert werden, dass sich in dem Leitungsabschnitt bzw. an dem Injektor ein Temperaturstau bildet. Die Kühleinrichtung kann mit einem Peltierelement ausgebildet sein, welches den Leitungsabschnitt bzw. den Injektor elektrisch kühlt. Bevorzugt ist aber, dass die Kühleinrichtung eine elektrische Kühleinrichtung ist.

Bevorzugt wird das Verfahren durchgeführt, wenn eine Start-Stopp-Situation bei einer Verbrennungskraftmaschine vorliegt. Vorzugsweise werden dann während Schritt b) die Abgasbehandlungsvorrichtung und die Verbrennungskraftmaschine gestoppt.

In diesem Zusammenhang ist es besonders vorteilhaft, wenn der erste Zeitraum so festgelegt ist, dass der erste Druck in dem Leitungsabschnitt zumindest aufrecht erhalten wird, bis nach Abschluss der Start-Stopp-Situation die Verbrennungskraftmaschine wieder aktiviert wird.

Eine Start-Stopp-Situation (einer Verbrennungskraftmaschine und/oder eines Kraftfahrzeuges) meint insbesondere eine Situation, in welcher das Kraftfahrzeug und/oder die Verbrennungskraftmaschine nicht für ein längeres Zeitintervall abgeschaltet wird, sondern lediglich eine kurze Betriebspause vorliegt, bei welcher klar und/oder bekannt ist, dass nach der kurzen Betriebspause (beispielsweise weniger als fünf Minuten, weniger als zwei Minuten oder sogar weniger als einer Minute) eine erneute Aktivierung der Verbrennungskraftmaschine erfolgen soll. Eine solche Start-Stopp-Situation kann in einem Kraftfahrzeug beispielsweise dadurch gekennzeichnet sein, dass das Stoppsignal (welches eine Deaktivierung der Verbrennungskraftmaschine auslöst) durch ein Motorsteuergerät ausgelöst wird, um Kraftstoff zu sparen. Das Stoppsignal wird insbesondere nicht durch eine Zündung (bzw. ein Zündschloss) ausgelöst, über welche ein Benutzer vorgibt, dass die Verbrennungskraftmaschine aktiviert (gestartet bzw. angelassen) und/oder deaktiviert (gestoppt) werden soll. Die Zündung einer Verbrennungskraftmaschine ist während einer Start-Stopp-Situation typischerweise aktiviert. Das Stoppsignal für eine Start-Stopp-Situation wird stattdessen beispielsweise durch einen Stillstand des Kraftfahrzeuges an einer Ampel ausgelöst, oder dadurch, dass das von der Verbrennungskraftmaschine keine Last abgefragt wird.

Eine der Start-Stopp-Situation sehr ähnliche Situation, in der das beschriebene Verfahren alternativ oder kumulativ angewendet werden kann, ist eine Betriebssituation eines Kraftfahrzeugs, in der das Kraftfahrzeug bewegt wird und die Verbrennungskraftmaschine des Kraftfahrzeuges trotzdem deaktiviert ist. Dies kann beispielsweise eine Betriebssituation sein, in der das Kraftfahrzeug ohne Antriebskraft rollt (bzw. ausrollt) - wie im so genannten Schub - und/oder bremst. Eine solche Betriebssituation kann bei einem Kraftfahrzeug mit Hybridantrieb (kombinierter Antrieb mit Verbrennungskraftmaschine und Elektroantrieb) auch vorliegen, wenn die Verbrennungskraftmaschine temporär deaktiviert ist und das Kraftfahrzeug nur von dem Elektroantrieb angetrieben wird.

Im Rahmen der Erfindung wird auch ein Kraftfahrzeug vorgeschlagen, das eine Verbrennungskraftmaschine und eine Abgasbehandlungsvorrichtung zur Reinigung der Abgase der Verbrennungskraftmaschine sowie eine Dosiereinheit ausweist, welche dazu eingerichtet ist, nach einem erfindungsgemäßen Verfahren betrieben zu werden. Insbesondere kann die Dosiereinheit mit einer Steuerung zusammenwirken, die eine Software umfasst, welche die Durchführung dieses Verfahrens kontrolliert.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: ein Kraftfahrzeug aufweisend eine Dosiereinheit,
- Fig. 2:: ein Ablaufdiagramm einer Ausführungsvariante des erfiridungsgemäßen Verfahrens und
- Fig. 3:: ein Ablaufdiagramm einer weiteren Ausführungsvariante des erfindungsgemäßen Verfahrens.

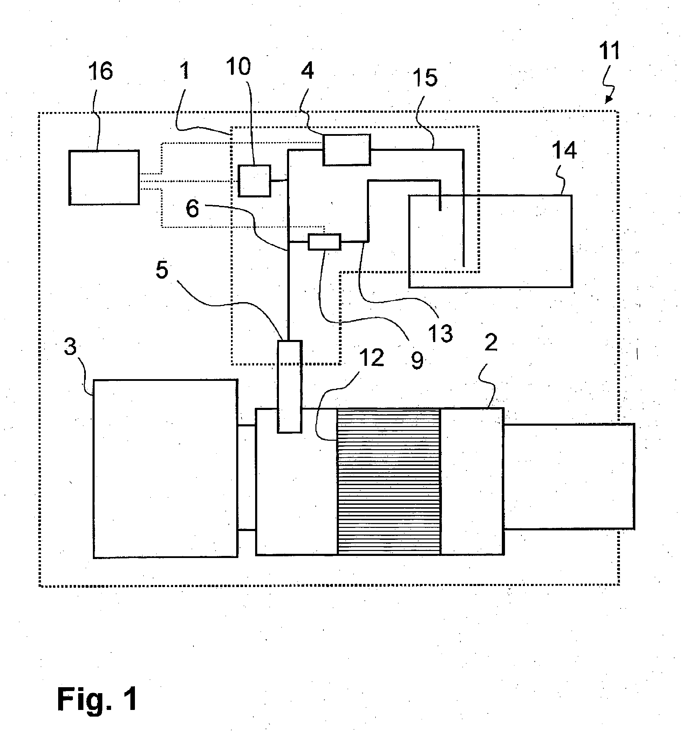

In Fig. 1 ist ein Kraftfahrzeug 11 dargestellt, welches eine Verbrennungskraftmaschine 3 und eine Abgasbehandlungsvorrichtung 2 zur Reinigung der Abgase der Verbrennungskraftmaschine 3 aufweist. Darüber hinaus weist das Kraftfahrzeug 11 eine Dosiereinheit 1 auf. An der Abgasbehandlungsvorrichtung 2 (z. B. Abgasleitung) ist ein Injektor 5 vorgesehen, über welchen ein Reduktionsmittel (z. B. Harnstoff-Wasser-Lösung) der Abgasbehandlungsvorrichtung 2 bzw. dem Abgas zugeführt werden kann. Der Injektor 5 wird von einer Dosiereinheit 1 aus einem Reduktionsmitteltank 14 mit Reduktionsmittel versorgt. In der Abgasbehandlungsvorrichtung 2 ist auch ein SCR-Katalysator 12 vorgesehen, in welchem mit Hilfe des von dem Injektor 5 zugeführten Reduktionsmittels das Verfahren der selektiven katalytischen Reduktion durchgeführt werden kann. Die Dosiereinheit 1 weist eine Förderpumpe 4 sowie einen Leitungsabschnitt 6 auf, welcher sich von der Förderpumpe 4 zu dem Injektor 5 erstreckt. An dem Leitungsabschnitt 6 ist ein Entlastungsventil 9 angeordnet. Wenn eine Entlastung des Leitungsabschnitts 6 erfolgen soll, kann das Entlastungsventil 9 geöffnet werden. Dann kann Reduktionsmittel aus dem Leitungsabschnitt 6 durch eine Rücklaufleitung 13 zurück in den Reduktionsmitteltank 14 gelangen. An dem Leitungsabschnitt 6 ist zusätzlich eine Aufrechterhaltungsvorrichtung 10 vorgesehen, welche dazu eingerichtet ist, einen definierten Druck in dem Leitungsabschnitt 6 aufrecht zu erhalten. Zur Durchführung des erfindungsgemäßen Verfahrens können die Förderpumpe und das Entlastungsventil 9 an eine Steuerung 16 angeschlossen sein, in welcher Routinen zur Durchführung dieses Verfahrens implementiert sind. Damit die Förderpumpe 4 Reduktionsmittel aus dem Reduktionsmitteltank 14 entnehmen kann, erstreckt sich von der Förderpumpe 4 zu dem Reduktionsmitteltank 14 ein Saugleitungsabschnitt 15.

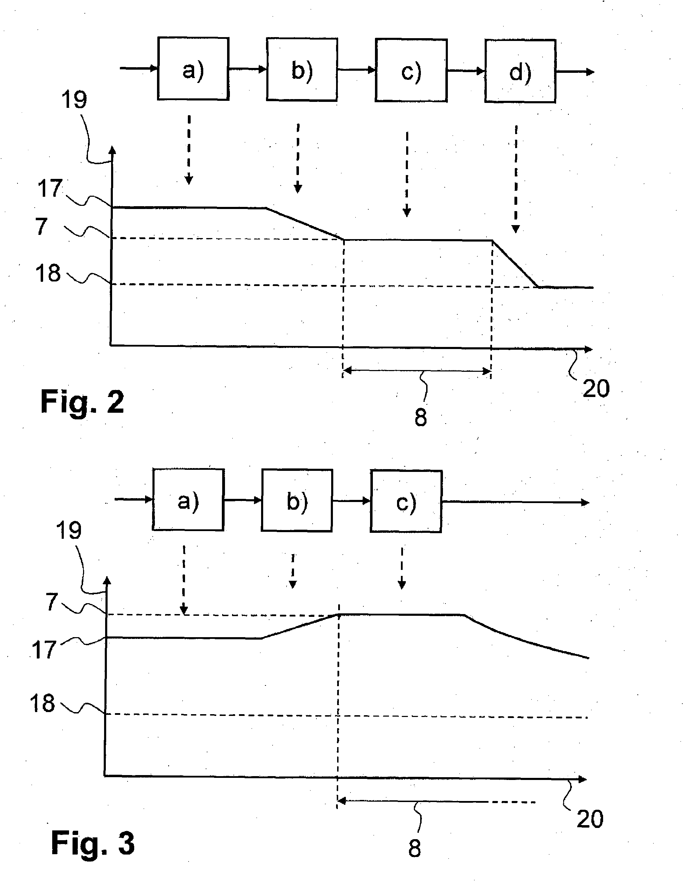

Fig. 2 zeigt ein Ablaufdiagramm des erfindungsgemäßen Verfahrens zusammen mit einer Darstellung des Drucks, welcher bei der Durchführung des erfindungsgemäßen Verfahrens in dem Leitungsabschnitt der Dosiereinheit vorliegt. Im Diagramm ist der Druck in dem Leitungsabschnitt auf der Druckachse 19 über die Zeitachse 20 aufgetragen. Während Verfahrensschritt a), wenn die Dosiereinheit in Betrieb ist, liegt in dem Leitungsabschnitt der Betriebsdruck 17 vor. Während Schritt b) erfolgt eine Abschaltung der Dosiereinheit. Es ist möglich, dass der Druck in dem Leitungsabschnitt dann auf den ersten Druck 7 abfällt. Der erste Druck 7 kann allerdings auch genauso hoch sein wie der Betriebsdruck 17. Der erste Druck 7 wird vorzugsweise während Schritt c) für einen ersten Zeitraum 8 aufrecht erhalten. Wenn der erste Zeitraum 8 abgelaufen ist, kann in dem Verfahrensschritt d) eine Druckentlastung erfolgen, so dass im Leitungsabschnitt nur noch der atmosphärische Druck 18 vorliegt. Der Verfahrensschritt d) ist nicht zwangsläufig für die Durchführung des erfindungsgemäßen Verfahrens erforderlich.

Fig. 3 zeigt ein Ablaufdiagramm einer weiteren Ausführungsvariante des erfindungsgemäßen Verfahrens zusammen mit einer Darstellung des Drucks, welcher bei der Durchführung des Verfahrens in dem Leitungsabschnitt der Dosiereinheit vorliegt. Im Diagramm ist der Druck in dem Leitungsabschnitt auf der Druckachse 19 über die Zeitachse 20 aufgetragen. Während Verfahrensschritt a), wenn die Dosiereinheit in Betrieb ist, liegt in dem Leitungsabschnitt der Betriebsdruck 17 vor. Während Schritt b) erfolgt eine Abschaltung der Dosiereinheit. Dabei findet auch eine Erhöhung des Drucks in dem Leitungsabschnitt (von dem Betriebsdruck 17) auf einen ersten Druck 7 statt. Dies kann beispielsweise durch eine Fortsetzung des Betriebs einer Förderpumpe und/oder durch eine erneute Aktivierung einer Förderpumpe der Dosiereinheit während des Schritt b) erreicht werden. Der erste Druck 7 wird vorzugsweise während Schritt c) für einen ersten Zeitraum 8 aufrechterhalten. Die Länge des ersten Zeitraums 8 muss fest nicht vorgegeben sein. Es ist möglich, dass Mittel zur Aufrechterhaltung des ersten Druck 7 während Schritt c) zeitlich unbegrenzt aktiviert bleiben und der Druck erst spät (beispielsweise aufgrund von Druckverlusten an Rücklauf- und/oder Dosierventilen) beginnt abzufallen.

Somit ist nun eine technisch überraschend einfache Lösung angegeben, mit der insbesondere die mit der Abschaltung einer Dosiereinheit für Reduktionsmittel einhergehenden Probleme wenigstens teilweise beseitigt wurden.

### Bezugszeichenliste

- 1: Dosiereinheit
- 2: Abgasbehandlungsvorrichtung
- 3: Verbrennungskraftmaschine
- 4: Förderpumpe
- 5: Injektor
- 6: Leitungsabschnitt
- 7: erster Druck
- 8: erster Zeitraum
- 9: Entlastungsventil
- 10: Aufrechterhaltungsvorrichtung
- 11: Kraftfahrzeug
- 12: SCR-Katalysator
- 13: Rücklaufleitung
- 14: Reduktionsmitteltank
- 15: Saugleitungsabschnitt
- 16: Steuerung
- 17: Betriebsdruck
- 18: atmosphärischer Druck
- 19: Druckachse
- 20: Zeitachse

## Patentansprüche

1. Verfahren zum Betrieb einer Dosiereinheit (1) zur Dosierung von Reduktionsmittel in eine Abgasbehandlungsvorrichtung (2) zur Reinigung der Abgase einer Verbrennungskraftmaschine (3), wobei die Dosiereinheit (1) zumindest eine Förderpumpe (4) und zumindest einen Injektor (5) sowie zumindest einen Leitungsabschnitt (6) zur Leitung von Reduktionsmittel von der zumindest einen Förderpumpe (4) hin zu dem zumindest einen Injektor (5) aufweist, und das Verfahren zumindest folgende Schritte aufweist:
a) Betreiben der Dosiereinheit (1) zur Dosierung von Reduktionsmittel in die Abgasbehandlungsvorrichtung (2);
b) Abschalten der Dosiereinheit (1);
c) Aufrechterhalten eines ersten Drucks (7), der oberhalb des atmosphärischen Drucks liegt, in dem Leitungsabschnitt (6) für zumindest einen ersten Zeitraum (8);
wobei während der Abschaltung in Schritt b) in dem Leitungsabschnitt (6) eine Druckerhöhung auf einen ersten Druck (7) erfolgt.

2. Verfahren nach Patentanspruch 1, wobei der erste Druck (7) während Schritt c) oberhalb von 2 bar liegt.

3. Verfahren nach Patentanspruch 1, wobei der erste Druck (7) während Schritt c) wenigstens 8 bar beträgt.

4. Verfahren nach einem der vorhergehenden Patentansprüche, wobei erst nach Ablauf des ersten Zeitraums (8) ein Entlastungsventil (9) an dem Leitungsabschnitt (6) geöffnet wird (Schritt d)).

5. Verfahren nach einem der vorhergehenden Patentansprüche, wobei der erste Druck (7) in dem Leitungsabschnitt (6) zumindest teilweise mit der Förderpumpe (4) erzeugt wird.

6. Verfahren nach einem der vorhergehenden Patentansprüche, wobei an dem Leitungsabschnitt (6) mindestens eine Aufrechterhaltungsvorrichtung (10) zur Aufrechterhaltung des ersten Drucks (7) vorgesehen ist.

7. Verfahren nach einem der vorhergehenden Patentansprüche, wobei das Verfahren durchgeführt wird, wenn eine Start-Stopp-Situation einer Verbrennungskraftmaschine (3) vorliegt.

8. Verfahren nach Patentanspruch 7, wobei der erste Zeitraum so festgelegt ist, dass der erste Druck (7) in dem Leitungsabschnitt (6) zumindest aufrecht erhalten wird, bis nach Abschluss der StartStopp-Situation die Verbrennungskraftmaschine (3) wieder aktiviert wird.

9. Kraftfahrzeug (11) aufweisend eine Verbrennungskraftmaschine (3) und eine Abgasbehandlungsvorrichtung (2) zur Reinigung der Abgase der Verbrennungskraftmaschine (3), sowie eine, mit einer Steuerung (16) zusammenwirkende Dosiereinheit (1), welche dazu eingerichtet ist nach einem Verfahren gemäß einem der vorhergehenden Patentansprüche betrieben zu werden.

## Claims

1. Method for operating a dosing unit (1) for dosing reducing agent into an exhaust-gas treatment device (2) for the purification of the exhaust gases of an internal combustion engine (3), wherein the dosing unit (1) has at least one delivery pump (4) and at least one injector (5) and also at least one line section (6) for conducting reducing agent from the at least one delivery pump (4) to the at least one injector (5), and the method has at least the following steps:
a) operating the dosing unit (1) in order to dose reducing agent into the exhaust-gas treatment device (2);
b) deactivating the dosing unit (1);
c) maintaining a first pressure (7), which is higher than the atmospheric pressure, in the line section (6) for at least one first time period (8);
wherein, during the deactivation in step b), a pressure increase to a first pressure (7) takes place in the line section (6).

2. Method as claimed in claim 1, wherein the first pressure (7) is higher than 2 bar during step c).

3. Method as claimed in claim 1, wherein the first pressure (7) is at least 8 bar during step c).

4. Method as claimed in one of the preceding claims, wherein a relief valve (9) on the line section (6) is opened only after the first time period (8) has elapsed (step d)).

5. Method as claimed in one of the preceding claims, wherein the first pressure (7) is generated in the line section (6) at least partially by means of the delivery pump (4).

6. Method as claimed in one of the preceding claims, wherein at least one maintaining device (10) for maintaining the first pressure (7) is provided on the line section (6).

7. Method as claimed in one of the preceding claims, wherein the method is executed in the presence of a start-stop situation of an internal combustion engine (3).

8. Method as claimed in claim 7, wherein the first time period is defined such that the first pressure (7) in the line section (6) is at least maintained until the internal combustion engine (3) is reactivated after the end of the start-stop situation.

9. Motor vehicle (11) having an internal combustion engine (3) and having an exhaust-gas treatment device (2) for the purification of the exhaust gases of the internal combustion engine (3) and having a dosing unit (1), interacting with a controller (16), which is configurated to be operated as per a method as claimed in one of the preceding claims.

## Revendications

1. Procédé pour faire fonctionner une unité de dosage (1) pour le dosage d'agent réducteur dans un dispositif de traitement de gaz d'échappement (2) pour purifier les gaz d'échappement d'un moteur à combustion interne (3), l'unité de dosage (1) présentant au moins une pompe de refoulement (4) et au moins un injecteur (5) ainsi qu'au moins une section de conduite (6) pour guider l'agent réducteur depuis l'au moins une pompe de refoulement (4) jusqu'à l'au moins un injecteur (5), et le procédé présentant au moins les étapes suivantes :
a) faire fonctionner l'unité de dosage (1) pour doser l'agent réducteur dans le dispositif de traitement de gaz d'échappement (2);
b) déconnecter l'unité de dosage (1) ;
c) maintenir une première pression (7), qui est supérieure à la pression atmosphérique, dans la section de conduite (6) pendant au moins un premier intervalle de temps (8) ;
une augmentation de pression jusqu'à une première pression (7) se produisant dans la section de conduite (6) pendant la déconnexion à l'étape b).

2. Procédé selon la revendication 1, dans lequel la première pression (7) pendant l'étape c) est située au-dessus de 2 bars.

3. Procédé selon la revendication 1, dans lequel la première pression (7) pendant l'étape c) vaut au moins 8 bars.

4. Procédé selon l'une quelconque des revendications précédentes, dans lequel une soupape de décharge (9) est ouverte (étape d)) au niveau de la section de conduite (6) seulement une fois le premier intervalle de temps (8) écoulé.

5. Procédé selon l'une quelconque des revendications précédentes, dans lequel la première pression (7) dans la section de conduite (6) est produite au moins en partie par la pompe de refoulement (4).

6. Procédé selon l'une quelconque des revendications précédentes, dans lequel au moins un dispositif de maintien (10) pour maintenir la première pression (7) est prévu au niveau de la section de conduite (6).

7. Procédé selon l'une quelconque des revendications précédentes, dans lequel le procédé est mis en oeuvre lorsqu'une situation de démarrage-arrêt d'un moteur à combustion interne (3) se présente.

8. Procédé selon la revendication 7, dans lequel le premier intervalle de temps est fixé de telle sorte que la première pression (7) soit maintenue dans la section de conduite (6) au moins jusqu'à ce qu'après la fin de la situation de démarrage-arrêt, le moteur à combustion interne (3) soit à nouveau activé.

9. Véhicule automobile (11) présentant un moteur à combustion interne (3) et un dispositif de traitement de gaz d'échappement (2) pour purifier les gaz d'échappement du moteur à combustion interne (3), ainsi qu'une unité de dosage (1) coopérant avec une commande (16), laquelle est prévue pour fonctionner selon un procédé selon l'une quelconque des revendications précédentes.
